# EUROPÄISCHE PATENTSCHRIFT

(11) **EP 1 108 385 B1**
(45) Veröffentlichungstag und Bekanntmachung des Hinweises auf die Patenterteilung: **16.02.2005**
(21) Anmeldenummer: 00124546.3
(22) Anmeldetag: 09.11.2000
(51) Int. Cl.: A47J 27/21, A47J 31/58

(54) **Behälter zur Erwärmung von Wasser**
Water-heating device
Chauffe-eau

(30) Priorität: 15.12.1999 DE 19960497
(43) Veröffentlichungstag der Anmeldung: 20.06.2001
(73) Patentinhaber: BSH Bosch und Siemens Hausgeräte GmbH, 81739 München (DE)
(72) Erfinder: Fränzel, Bernd, Dr.-Ing., 83301 Traunreut (DE)

(56) Entgegenhaltungen:
- DE-A- 2 638 040
- FR-A- 2 462 893
- GB-A- 1 264 464
- GB-A- 2 292 841

## Beschreibung

Die Erfindung geht aus von einem Behälter zur Erwärmung von Wasser nach dem Oberbegriff des Anspruchs 1.

Bekannte Wasserkocher besitzen zumindest eine Heizfläche, die wenigstens von einem Heizelement beheizt wird, beispielsweise von einem Rohrheizkörper, einem Dickschichtheizelement usw. Um zu vermeiden, dass beim Betrieb des Wasserkochers ohne Wasser das Heizelement oder sonstige Bauteile des Wasserkochers durch Überhitzung zerstört werden, ist bekannt, im Bereich der Heizfläche über einen Temperatursensor, einen sogenannten Trokkenlaufsensor, eine Temperatur zu erfassen. Die erfasste Temperatur wird in einer Vorrichtung mit einem Sollwert verglichen. Übersteigt die erfasste Temperatur die Solltemperatur um einen gewissen Betrag, wird das Heizelement abgeschaltet, und zwar in der Regel bei ca. 135° C.

Während des Gebrauchs des Wasserkochers lagert sich auf der Heizfläche eine Kalkschicht ab. Durch die Kalkschicht wird der Wärmetransport vom Heizelement zum Wasser behindert. Um durch eine Kalkschicht bedingte Energieverluste und lokale Überhitzungen weitgehend zu vermeiden, sollte der Wasserkocher regelmäßig entkalkt werden.

Aus der Druckschrift FR 2 462 893 ist ein Durchlauferhitzer zur Erwärmung von Wasser mit mehreren Thermoelementen bekannt, die mit einer Außenfläche eines Heizkörpers verbunden sind. Die Thermoelemente sind über elektrische Anschlüsse mit einer Anzeigevorrichtung vierbunden. Über die Thermoelemente ist eine verkalkungsbedingt ansteigende Temperatur des Durchlauferhitzers erfassbar. Die Thermoelemente sind direkt am Heizkörper und damit im Bereich der größten Wärmezufuhr angeordnet.

Die Aufgabe der Erfindung besteht darin, einen gattungsgemäßen Behälter bereitzustellen, bei dem ungewünschte, insbesondere durch Kalkabplatzungen bedingte Störungen zumindest weitgehend vermieden werden können. Die Aufgabe wird erfindungsgemäß durch die Merkmale des Anspruchs 1 gelöst, während vorteilhafte Ausgestaltungen und Weiterbildungen der Erfindung den Unteransprüchen entnommen werden können.

Die Erfindung geht aus von einem Behälter zur Erwärmung von Wasser mit wenigstens einem Temperatursensor und mit einer Vorrichtung, die zumindest ein Signal ausgibt, sobald die erfasste Temperatur einen vorgegebenen Temperaturwert überschreitet, wobei mit dem Temperatursensor eine sich durch eine Kalkschicht einstellende Temperaturerhöhung erfassbar ist und der vorgegebene Temperaturwert durch eine maximal zulässige Kalkschicht bestimmt ist. Mit dem Temperatursensor kann vorteilhaft ein Grad der Verkalkung des Behälters ertasst werden. Der Behälter und ein oder mehrere im Behälter eingebrachte Heizelemente können einfach und kostengünstig vor einer Überhitzung infolge einer Verkalkung geschützt werden. Ferner kann durch eine rechtzeitige Entkalkung Energie eingespart und eine kurze Zeitspanne vom Einschalten eines Heizelements bis zum Kochen des Wassers beibehalten werden. Die erfindungsgemäße Lösung kann besonders vorteilhaft bei Behältern mit zumindest einem integrierten Heizelement eingesetzt werden, wie insbesondere Wasserkocher, Boiler usw. Daneben eignet sich die erfindungsgemäße Lösung jedoch auch dazu, eine Verkalkung von Behältern zu erfassen, in denen über separate Heizelemente Wasser erhitzt wird, beispielsweise Kochtöpfe usw.

Um weitgehend die Temperaturwerte einer gesamten Heizfläche zu erfassen, können mehrere Temperatursensoren über der Heizfläche verteilt angeordnet sein. Insbesondere bei Behältern mit zumindest einem Heizelement ist jedoch bekannt, dass sich der Kalk in Bereichen großer Wärmezufuhr stärker ablagert als in Bereichen kleiner Wärmezufuhr. Zudem ist zu beachten, dass Kalkschichten häufig im Bereich der größten Wärmezufuhr abplatzen. Aufgrund dessen wird vorgeschlagen, dass der Temperatursensor in einem Bereich angeordnet ist, in den über eine begrenzte Querschnittsfläche ein definierter Wärmestrom geleitet und der ausgenommen in Richtung des Wassers weitgehend thermisch entkoppelt ist, so dass der zugeführte Wärmestrom nahezu ausschließlich an das Wasser abführbar ist. Es kann vorteilhaft gezielt in bestimmten Stellen, in denen sich erfahrungsgemäß eine bleibende Kalkschicht ablagert, eine sich durch eine ablagernde Kalkschicht bedingte Temperaturerhöhung exakt erfasst werden. Störeinflüsse durch eine Wärmeabfuhr in kältere Bereiche der Heizfläche können vermieden werden, beispielsweise in einen Bereich mit einer abgeplatzten Kalkschicht.

Besitzt der Behälter eine Wärmediffusorplatte, kann der Temperatursensor kostengünstig und einfach durch eine Aussparung in der Wärmediffusorplatte entkoppelt werden. Behälter mit integrierten Dickschichtheizelementen besitzen in der Regel keine Wärmediffusorplatte.

Dickschichtheizelemente können jedoch besonders flexibel gestaltet werden, wodurch eine thermische Entkopplung einfach und kostengünstig durch einen vergrößerten Leiterzugabstand bzw. einen vergrößerten Abstand zwischen zwei Bahnen des Dickschichtheizelements oder durch einen separaten, auf die Temperaturerfassung abgestimmten Heizkreis erreicht werden kann. Ein separater Heizkreis für die Temperaturerfassung wird vorteilhaft parallel zu einem Hauptheizkreis geschaltet.

In einer weiteren Ausgestaltung wird vorgeschlagen, daß die Vorrichtung zumindest ein integriertes Heizelement bei Überschreiten des vorgegebenen Temperaturwerts abschaltet. Eine kalkbedingte Überhitzung und damit verbundene Schäden können sicher vermieden werden. Um zu vermeiden, daß ein Benutzer beim kalkbedingten Abschalten des Behälters auf einen Defekt schließt, gibt vorteilhaft die Vorrichtung ein auf eine Verkalkung hinweisendes akustisches und/oder optisches Signal aus. Das Signal kann mechanisch und/oder elektrisch ausgelöst und kann einmalig, mehrfach oder kontinuierlich ausgegeben werden, beispielsweise über eine Leuchtanzeige, die dem Benutzer die Notwendigkeit der Entkalkung anzeigt.

Wird der Temperatursensor einstückig mit einem Trockenlaufsensor ausgeführt, können zusätzliche Bauteile, Bauraum, Montageaufwand und Kosten eingespart werden. Der Temperatursensor ist ferner vorzugsweise im montierten Zustand einstellbar ausgeführt, wodurch Fertigungstoleranzen ausgeglichen und der Temperatursensor einfach an verschiedene Geräteausführungen angepaßt werden kann.

Der Temperatursensor kann durch verschiedene, dem Fachmann als sinnvoll erscheinende Baugruppen gebildet sein. Besitzt der Behälter bereits eine elektronische Schaltung, wird der Temperatursensor vorteilhaft von einem elektronischen Bauteil gebildet, beispielsweise einem temperaturabhängigen Widerstand usw., das einfach in die Schaltung integriert werden kann. In einer Ausgestaltung wird vorgeschlagen, daß der Temperatursensor zumindest ein Bimetallelement aufweist. Der Temperatursensor kann besonders kostengünstig mit einem Bimetallelement realisiert werden und zudem kann die temperaturbedingte Verformung des Bimetallelements genutzt werden, ein Signal auszulösen. Ferner kann der Temperatursensor mit einem Bimetallelement konstruktiv einfach mit einer Schraube einstellbar ausgeführt werden.

In einer vorteilhaften Ausgestaltung der Erfindung beinhaltet die Vorrichtung eine stetige Anzeige der Dicke der Kalkschicht.

Vorzugsweise ist der Temperatursensor ein temperaturabhängiger Widerstand. Dabei kann der Widerstand einen positiven (PTC) - oder negativen (NTC) Temperaturkoeffizienten aufweisen. Der Temperatursensor kann dabei vorzugsweise unmittelbar als Anzeigeelement wirken. Ebenso kann der Temperatursensor vorteilhafterweise unmittelbar als Schalter wirken. Der Temperatursensor kann vorzugsweise auch ein Steuersignal erzeugen, das über eine Kopplung einen Schalter steuert.

In einer vorteilhaften Ausgestaltung der Erfindung erzeugt der Temperatursensor ein Steuersignal, das über eine Kopplung ein Anzeigeelement steuert.

Vorzugsweise ist der Temperatursensor ein Bimetallsensorelement, das mindestens einen Kontakt trägt, der mit mindestens einem zweiten Kontakt zusammenwirkt. Dieser zweite Kontakt ist vorteilhaft auf einem Heizelement, insbesondere auf einem Dickschichtheizelement aufgebracht oder in dieses integriert. In einer Variante hierzu kann der zweite Kontakt auch auf einer Haltevorrichtung an einem Heizelement aufgebracht oder in diese integriert sein. Der zweite Kontakt kann auch vorteilhaft an einer vorhandenen Steuereinrichtung angeordnet sein.

In einer vorteilhaften Ausgestaltung der Erfindung ist der Temperatursensor oder eine ihm zugeordnete Anzeigevorrichtung oder beides in eine Steuereinheit integriert ist, die Mittel zu einer elektrischen Verbindung, insbesondere eine elektrische Kupplung enthalten. Diese Steuereinheit kann auch Mittel zur Steuerung einer Heizung, insbesondere ein Dampfstop oder Trockengehschutz enthalten.

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: einen Ausschnitt eines Wasserkochers von unten ohne Abdeckung und
- Fig. 2: einen Ausschnitt einer Seitenansicht des Wasserkochers aus Fig. 1.

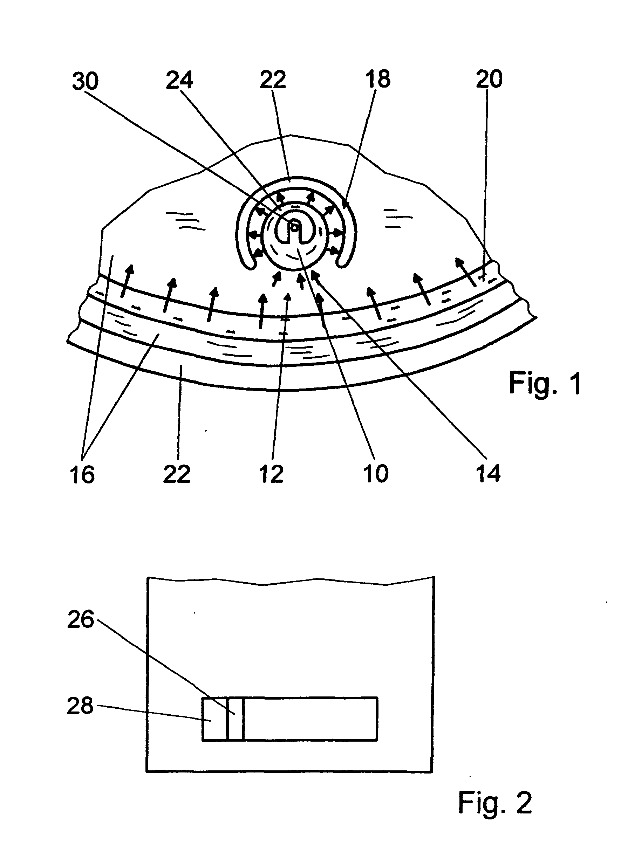

In Fig. 1 ist ein Ausschnitt eines Wasserkochers mit einem Rohrheizkörper 20 von unten ohne Abdeckung dargestellt. Der Rohrheizkörper 20 ist auf einer Wärmediffusorplatte 16 aus Aluminium befestigt, die wiederum auf einem Behälterboden 22 aus Edelstahl befestigt ist. Auf der Wärmediffusorplatte 16 ist mit einem Nietstift 30 ein Temperatursensor 10 befestigt, der von einem Bimetallelement gebildet ist.

Der Temperatursensor 10 ist mit einem Abstand zum Rohrheizkörper 20 in einem Bereich angeordnet, in dem sich erfahrungsgemäß eine bleibende Kalkschicht auf einer dem Wasser zugewandten Seite des Behälterbodens 22 ablagert. In den Bereich wird über eine begrenzte Querschnittsfläche 12 ein definierter Wärmestrom 14 geleitet. Der Bereich ist bis auf in Richtung des Wassers weitgehend thermisch entkoppelt, so daß der zugeführte Wärmestrom 14 nahezu ausschließlich an das Wasser abführbar ist, und zwar ist der Bereich über eine sichelförmige Aussparung 18 in der Wärmediffusorplatte 16 in die vom Rohrheizkörper 20 abgewandte Richtung thermisch entkoppelt. Der Behälterboden 22 besitzt eine weit geringere Wärmeleitfähigkeit als die Wärmediffusorplatte 16, so daß ein Wärmestrom aus dem Bereich des Temperatursensors 10 über den Behälterboden 22 zu vernachlässigen ist.

Der Temperatursensor 10 stellt gleichzeitig eine Vorrichtung dar, über die Signale ausgegeben werden können, und zwar durch eine temperaturabhängige Verformung des Bimetallelements. Bei fehlender oder geringer Kalkschicht stellt sich im Bereich des Temperatursensors 10 ein thermisches Gleichgewicht bei einer relativ niedrigen Temperatur ein. Das Bimetallelement verbleibt in seiner Stellung. Wird die Wärmeabfuhr aus dem Bereich des Temperatursensors 10 durch eine Kalkschicht behindert, nimmt die Temperatur in diesem Bereich zu. Eine kalkbedingte Temperaturerhöhung kann durch den Temperatursensor 10 exakt erfaßt werden.

Mit der Temperaturzunahme bewegt sich ein dem Rohrheizkörper 20 abgewandter Teil 24 des Bimetallelements in die von der Wärmediffusorplatte 16 abgewandte Richtung.

Wird eine maximal zulässige Kalkschicht überschritten und damit ein bestimmter vorgegebener Temperaturwert, wird über den Teil 24 des Bimetallelements ein nicht näher dargestellter Kontakt unterbrochen und der Rohrheizkörper 20 abgeschaltet. Über den Temperatursensor 10 wird ein Abschaltsignal ausgelöst, und zwar bei einem Temperaturwert, der zwischen einer maximal möglichen Siedetemperatur des Wassers von 100° C und einer Ansprechtemperatur von ca. 135°C eines herkömmlichen Trockenlaufsensors liegt, der maximal aber auch gleich der Ansprechtemperatur eines herkömmlichen Trokkenlaufsensors sein kann.

Ferner wird über das Bimetallelement ein optisches Anzeigeelement 26 betätigt bzw. in einem Sichtfenster 28 verschoben. Stellt sich nach Abschalten des Wasserkochers das Bimetallelement zurück, verbleibt das Anzeigeelement 26 in seiner Position, in die es durch das Bimetallelement verschoben wurde. Durch das Anzeigeelement 26 kann von einem Benutzer erkannt werden, wann eine Entkalkung fällig ist. Ferner kann der Grund für ein kalkbedingtes Abschalten des Rohrheizkörpers 20 am Anzeigeelement 26 erkannt werden. Nach einem Entkalkungsvorgang kann das Anzeigeelement 26 manuell vom Benutzer in seine Ausgangsstellung zurückgestellt werden. Mit dem Zurückstellen des Anzeigeelements 26 wird der durch das Bimetallelement unterbrochene Kontakt zum Rohrheizkörper 20 wieder hergestellt.

Der Temperatursensor 10 dient zusätzlich als Trockenlaufsensor, d.h. wird der Wasserkocher ohne Wasser betrieben, wird der vorgegebene Temperaturwert überschritten und der Rohrheizkörper 20 abgeschaltet.

Eine mechanische Vorspannung des Bimetallelements kann nach der Montage im Wasserkocher über eine nicht näher dargestellte Stellschraube eingestellt und damit der Temperatursensor 10 exakt kalibriert werden. Der Temperatursensor 10 kann bei verschiedenen Behältern eingesetzt und es kann ein Abschalten von Heizelementen stets bei einer weitgehend gleichen Kalkschicht erreicht werden.

## Patentansprüche

1. Behälter zur Erwärmung von Wasser mit wenigstens einem Temperatursensor (10) und mit einer Vorrichtung, die zumindest ein Signal ausgibt, sobald die erfasste Temperatur einen vorgegebenen Temperaturwert überschreitet, wobei mit dem Temperatursensor (10) eine sich durch eine Kalkschicht einstellende Temperaturerhöhung erfassbar ist und der vorgegebene Temperaturwert durch eine maximal zulässige Kalkschicht bestimmt ist, **dadurch gekennzeichnet dass** der Temperatursensor (10) in einem Bereich angeordnet ist, in den über eine begrenzte Querschnittsfläche (12) ein Wärmestrom (14) geleitet und der ausgenommen in Richtung des Wassers weitgehend thermisch entkoppelt ist, so dass der zugeführte Wärmestrom (14) nahezu ausschließlich an das Wasser abführbar ist

2. Behälter nach Anspruch 1, **dadurch gekennzeichnet, dass** der Temperatursensor (10) mit einer Wärmediffusorplatte (16) zumindest thermisch verbunden ist und der Bereich des Temperatursensors (10) über eine Aussparung (18) in der Wärmediffusorplatte (16) entkoppelt ist.

3. Behälter nach Anspruch 1, **dadurch gekennzeichnet, dass** ein Dickschichtheizelement integriert und der Bereich des Temperatursensors durch wenigstens einen vergrößerten Leiterzugabstand thermisch entkoppelt ist.

4. Behälter nach einem der vorhergehenden Ansprüche, **dadurch gekennzeichnet, dass** die Vorrichtung zumindest ein integriertes Heizelement (20) bei Überschreiten des vorgegebenen Temperaturwerts abschaltet.

5. Behälter nach einem der vorhergehenden Ansprüche, **dadurch gekennzeichnet, dass** die Vorrichtung ein auf eine Verkalkung hinweisendes optisches und/oder akustisches Signal ausgibt.

6. Behälter nach einem der vorhergehenden Ansprüche, **dadurch gekennzeichnet, dass** der Temperatursensor (10) einstückig mit einem Trockenlaufsensor ausgeführt ist.

7. Behälter nach einem der vorhergehenden Ansprüche, **dadurch gekennzeichnet, dass** der Temperatursensor (10) im montierten Zustand einstellbar ist.

8. Behälter nach einem der vorhergehenden Ansprüche, **dadurch gekennzeichnet, dass** der Temperatursensor (10) zumindest ein Bimetallelement aufweist.

9. Behälter nach einem der vorhergehenden Ansprüche, **dadurch gekennzeichnet, dass** die Vorrichtung eine stetige Anzeige der Dicke der Kalkschicht beinhaltet.

10. Behälter nach einem der vorhergehenden Ansprüche, **dadurch gekennzeichnet, dass** der Temperatursensor (10) ein temperaturabhängiger Widerstand ist.

11. Behälter nach einem der Ansprüche 1 bis 9, **dadurch gekennzeichnet, dass** der Temperatursensor (10) unmittelbar als Anzeigeelement wirkt.

12. Behälter nach einem der Ansprüche 1 bis 9, **dadurch gekennzeichnet, dass** der Temperatursensor (10) unmittelbar als Schalter wirkt.

13. Behälter nach einem der vorhergehenden Ansprüche, **dadurch gekennzeichnet, dass** der Temperatursensor (10) ein Steuersignal erzeugt, das über eine Kopplung ein Anzeigeelement steuert.

14. Behälter nach einem der Ansprüche 1 bis 11 und 13, **dadurch gekennzeichnet, dass** der Temperatursensor (10) ein Steuersignal erzeugt, das über eine Kopplung einen Schalter steuert.

15. Behälter nach Anspruch 8, **dadurch gekennzeichnet, dass** der Temperatursensor (10) ein Bimetallsensorelement ist, das mindestens einen Kontakt trägt, der mit mindestens einem zweiten Kontakt zusammenwirkt.

16. Behälter nach Anspruch 15, **dadurch gekennzeichnet, dass** der zweite Kontakt auf einem Heizelement, insbesondere auf einem Dickschichtheizelement aufgebracht oder in dieses integriert ist.

17. Behälter nach Anspruch 15, **dadurch gekennzeichnet, dass** der zweite Kontakt auf einer Haltevorrichtung an einem Heizelement aufgebracht oder in diese integriert ist.

18. Behälter nach Anspruch 15, **dadurch gekennzeichnet, dass** der zweite Kontakt an einer vorhandenen Steuereinrichtung angeordnet ist.

19. Behälter nach einem der Ansprüche 1 bis 9, **dadurch gekennzeichnet, dass** der Temperatursensor (10) und/oder eine ihm zugeordnete Anzeigevorrichtung in eine Steuereinheit integriert ist, die Mittel zu einer elektrischen Verbindung, insbesondere eine elektrische Kupplung und/oder Mittel zur Steuerung einer Heizung, insbesondere ein Dampfstopp oder Trockengehschutz enthalten.

## Claims

1. Container for heating water, comprising at least one temperature sensor (10) and a device which issues at least one signal as soon as the detected temperature exceeds a predetermined temperature value, wherein a temperature increase setting in due to a calcium layer is detectable by the temperature sensor (10) and the predetermined temperature value is determined by a maximum permissible calcium layer, **characterised in that** the temperature sensor (10) is arranged in a region in which a heat flow (14) is conducted over a limited cross-sectional area (12) and which is largely thermally decoupled except in the direction of the water so that the supplied heat flow (14) can be drawn off almost exclusively at the water.

2. Container according to claim 1, **characterised in that** the temperature sensor (10) is at least thermally connected with a heat diffuser plate (16) and the region of the temperature sensor (10) is decoupled by way of a cut-out (18) in the heat diffuser plate (16).

3. Container according to claim 1, **characterised in that** a thick-film heating element is integrated and the region of the temperature sensor (10) is thermally decoupled by at least one enlarged conductor stripline spacing.

4. Container according to one of the preceding claims, **characterised in that** the device switches off at least one integrated heating element (20) in the case of exceeding of the predetermined temperature value.

5. Container according to one of the preceding claims, **characterised in that** the device issues an optical and/or acoustic signal indicating a calcification.

6. Container according to one of the preceding claims, **characterised in that** the temperature sensor (10) is formed integrally by a dry-operation sensor.

7. Container according to one of the preceding claims, **characterised in that** the temperature sensor (10) is adjustable in the mounted state.

8. Container according to one of the preceding claims, **characterised in that** the temperature sensor (10) comprises at least one bimetallic element.

9. Container according to one of the preceding claims, **characterised in that** the device contains a constant indication of the thickness of the calcium layer.

10. Container according to one of the preceding claims, **characterised in that** the temperature sensor (10) is a temperature-dependent resistance.

11. Container according to one of claims 1 to 9, **characterised in that** the temperature sensor (10) acts directly as an indicating element.

12. Container according to one of claims 1 to 9, **characterised in that** the temperature sensor (10) acts directly as a switch.

13. Container according to one of the preceding claims, **characterised in that** the temperature sensor (10) produces a control signal which controls an indicating element by way of a coupling.

14. Container according to one of claims 1 to 11 and 13, **characterised in that** the temperature sensor (10) produces a control signal which controls a switch by way of a coupling.

15. Container according to claim 8, **characterised in that** the temperature sensor (10) is a bimetallic sensor element carrying at least one contact which co-operates with at least one second contact.

16. Container according to claim 15, **characterised in that** the second contact is applied to a heating element, particularly to a thick-film heating element, or integrated therein.

17. Container according to claim 15, **characterised in that** the second contact is applied to a holding device at a heating element or integrated therein.

18. Container according to claim 15, **characterised in that** the second contact is arranged at a control device which is present.

19. Container according to one of claims 1 to 9, **characterised in that** the temperature sensor (10) and/or an indicating device associated therewith is or are integrated in a control unit, which comprises means for making an electrical connection, particularly an electrical coupling, and/or means for controlling a heating, particularly a steam checking device or a running-dry protector.

## Revendications

1. Réservoir pour l'échauffement d'eau, comprenant au moins un capteur de température (10) et un dispositif qui émet au moins un signal dès que la température détectée dépasse une valeur de température prédéfinie, une augmentation de température qui se règle en raison d'une couche de calcaire étant détectable au moyen du capteur de température (10) et la valeur de température prédéfinie étant déterminée par une couche de calcaire maximale admissible, **caractérisé en ce que** le capteur de température (10) est placé dans une partie, dans laquelle un flux de chaleur (14) est conduit sur une surface de section transversale limitée (12) et **en ce qu'**il est largement découplé thermiquement, sauf en direction de l'eau, de sorte que le flux de chaleur (14) amené peut être évacué pratiquement exclusivement pour l'eau.

2. Réservoir selon la revendication 1, **caractérisé en ce que** le capteur de température (10) est raccordé, au moins thermiquement, à une plaque de diffusion de chaleur (16) et **en ce que** la partie du capteur de température (10) est découplée par l'intermédiaire d'un évidement (18) dans la plaque de diffusion de chaleur (16).

3. Réservoir selon la revendication 1, **caractérisé en ce qu'**un élément de chauffage à couches épaisses est intégré et **en ce que** la partie du capteur de température est découplée thermiquement au moyen d'au moins un écart de conducteur agrandi.

4. Réservoir selon l'une quelconque des revendications précédentes, **caractérisé en ce que** le dispositif déconnecte au moins un élément de chauffage (20) intégré, lorsque la valeur de température prédéfinie est dépassée.

5. Réservoir selon l'une quelconque des revendications précédentes, **caractérisé en ce que** le dispositif émet un signal optique et/ou acoustique indiquant un entartrage.

6. Réservoir selon l'une quelconque des revendications précédentes, **caractérisé en ce que** le capteur de température (10) est exécuté d'une seule pièce avec un capteur contre la marche à sec.

7. Réservoir selon l'une quelconque des revendications précédentes, **caractérisé en ce que** le capteur de température (10) est réglable à l'état installé.

8. Réservoir selon l'une quelconque des revendications précédentes, **caractérisé en ce que** le capteur de température (10) présente au moins un élément bimétallique.

9. Réservoir selon l'une quelconque des revendications précédentes, **caractérisé en ce que** le dispositif comprend une indication permanente de l'épaisseur de la couche de calcaire.

10. Réservoir selon l'une quelconque des revendications précédentes, **caractérisé en ce que** le capteur de température (10) est une résistance dépendant de la température.

11. Réservoir selon l'une quelconque des revendications 1 à 9, **caractérisé en ce que** le capteur de température (10) agit directement comme élément d'indication.

12. Réservoir selon l'une quelconque des revendications 1 à 9, **caractérisé en ce que** le capteur de température (10) agit directement comme commutateur.

13. Réservoir selon l'une quelconque des revendications précédentes, **caractérisé en ce que** le capteur de température (10) génère un signal de commande qui commande un élément d'indication par l'intermédiaire d'un couplage.

14. Réservoir selon l'une quelconque des revendications 1 à 11 et 13, **caractérisé en ce que** le capteur de température (10) génère un signal de commande qui commande un commutateur par l'intermédiaire d'un couplage.

15. Réservoir selon la revendication 8, **caractérisé en ce que** le capteur de température (10) est un élément capteur bimétallique qui porte au moins un contact agissant avec au moins un deuxième contact.

16. Réservoir selon la revendication 15, **caractérisé en ce que** le deuxième contact est appliqué sur un élément de chauffage, notamment sur un élément de chauffage à couches épaisses, ou est intégré dans celui-ci.

17. Réservoir selon la revendication 15, **caractérisé en ce que** le deuxième contact est appliqué sur un dispositif de maintien sur un élément de chauffage ou est intégré dans ce dispositif.

18. Réservoir selon la revendication 15, **caractérisé en ce que** le deuxième contact est placé sur un dispositif de commande existant.

19. Réservoir selon l'une quelconque des revendications 1 à 9, **caractérisé en ce que** le capteur de température (10) et/ou un dispositif d'indication qui lui est attribué sont intégrés dans une unité de commande qui comprend des moyens pour une liaison électrique, notamment un couplage électrique, et/ou des moyens pour la commande d'un chauffage, notamment un pare-vapeur ou un dispositif de protection contre la marche à sec.
